# FASCICULE DE BREVET EUROPEEN

(11) **EP 4 000 448 B1**
(45) Date de publication et mention de la délivrance du brevet: **19.04.2023**
(21) Numéro de dépôt: 21204977.9
(22) Date de dépôt: 27.10.2021
(51) Int. Cl.: A45C 11/00

(54) **HOUSSE DE PROTECTION POUR ORDINATEUR PORTABLE**
SCHUTZHÜLLE FÜR EINEN LAPTOP
PROTECTION CASE FOR LAPTOP

(30) Priorité: 16.11.2020 FR 2011688
(43) Date de publication de la demande: 25.05.2022
(73) Titulaire: Mobilis Development, 74650 Chavanod (FR)
(72) Inventeur: JEANNEAU, Benoit, 74600 Annecy (FR); FERNANDEZ, Marc, 74000 Annecy (FR)
(74) Mandataire: Cabinet Laurent & Charras

(56) Documents cités:
- GB-A- 2 489 190
- US-A1- 2005 231 930
- US-A1- 2013 016 467

## Description

### DOMAINE DE L'INVENTION

L'invention concerne une housse de protection pour ordinateur portable, destinée à protéger ledit ordinateur des chocs lors de son transport et de son utilisation. Elle vise plus particulièrement une housse de protection pour ordinateur portable de type à écran susceptible d'être articulé à la base dudit ordinateur selon un débattement angulaire de 360°, et dans lequel ledit écran est susceptible de servir de tablette tactile.

### ETAT ANTERIEUR DE LA TECHNIQUE

Les housses et autres étuis de protection destinés à faciliter le transport et la protection des ordinateurs portables sont d'un usage largement répandu, et sont quasiment aussi anciens que les ordinateurs portables proprement dits. Elles se présentent classiquement sous la forme d'une sacoche de dimension appropriée dans laquelle ledit ordinateur peut être inséré.

Elles ont fait l'objet de perfectionnements permettant de conserver ledit ordinateur au sein de la housse lors de son utilisation. Dans ce cas, elles sont constituées d'une partie supérieure et d'une partie inférieure articulées entre elles, ladite partie inférieure recevant l'ordinateur proprement dit, éventuellement solidarisée à ladite partie inférieure par tout moyen approprié tel qu'une lanière ou un ruban élastique. Lors des phases de transport, la partie supérieure de la housse est refermée sur la partie inférieure et est solidarisée à cette dernière au moyen d'une fermeture type zip. Lors des phases d'utilisation, la partie supérieure est ouverte, permettant l'ouverture de l'écran dudit ordinateur et ainsi l'utilisation de ce dernier.

Si de telles housses remplissent leurs fonctions pour les ordinateurs portables de type classique, en revanche, elles s'avèrent inadaptées pour les ordinateurs de type convertible PC - tablette, c'est-à-dire dans lesquels l'écran est susceptible d'être ouvert à 360° par rapport à sa base, lorsque ledit écran peut être utilisé en tant que tablette tactile. En effet, dans cette configuration, l'ordinateur doit être complètement retiré de la housse afin de permettre la rotation effective de l'écran par rapport à sa base.

Le document US2013016467 divulgue une housse de protection pour ordinateur portable ayant une première partie et une seconde partie articulées l'une à l'autre.

L'obj ectif recherché par la présente invention est de permettre d'assurer la protection de ce genre d'ordinateur portable convertible PC - tablette, y compris lorsque l'ordinateur est utilisé en mode tablette tactile, et ce au moyen d'une housse de protection, conservant sa fonction première de protection, tant lors du transport que lors de l'utilisation dudit ordinateur, et ce, sans nécessiter le retrait dudit ordinateur hors de la housse, notamment lors du passage de ce dernier du mode PC en mode tablette.

### EXPOSE DE L'INVENTION

A cet effet, l'invention vise une housse de protection pour ordinateur portable, ladite housse comprenant une première partie et une seconde partie, articulées l'une à l'autre au niveau d'une zone de j onction, et destinée à protéger la face supérieure (écran) et la face inférieure (base) dudit ordinateur portable.

Selon l'invention :
- l'une des parties est munie d'un réceptacle apte à recevoir la base dudit ordinateur, ledit réceptacle étant articulé au niveau du bord libre de ladite partie, opposé au bord de cette dernière adjacent à la zone de jonction entre les deux parties ;
- ladite partie est constituée d'un cadre définissant une ouverture traversante, et d'un volet rabattable sur ledit cadre, apte à obturer ladite ouverture.

En d'autres termes, l'invention consiste à recevoir la base dudit ordinateur portable, non pas directement au niveau de l'une des parties de la housse, en l'espèce la partie inférieure, mais dans un réceptacle ou berceau, articulé sur la partie considérée, et permettant ainsi à la base de l'ordinateur d'être basculée par rapport à la partie inférieure sans être escamotée hors de celle-ci, et corollairement de rabattre l'écran à 360° jusqu'à aboutir au mode tablette, et ce, sans avoir à ôter l'ordinateur de ladite housse, la partie considérée étant constituée de telle sorte à permettre l'accès à l'écran en raison de la présence d'un volet rabattable.

Selon une caractéristique de l'invention, le volet rabattable est également articulé au niveau de la zone de jonction entre la partie supérieure et la partie inférieure.

Selon l'invention, ce volet est fixable réversiblement sur le cadre de la partie inférieure de la housse par tout moyen, et notamment par un système de type boucles et crochets, mieux connu sous la marque déposée Velcro^{®}.

Selon l'invention, le réceptacle est muni de logements aptes à recevoir ledit ordinateur et, plus spécifiquement, la base dudit ordinateur, et ce, de manière amovible.

Selon encore une autre caractéristique de l'invention, le réceptacle s'étend sur une partie seulement de l'une des dimensions de la partie considérée.

Selon l'invention, l'articulation entre le réceptacle et la partie concernée est réalisée par simple couture.

Avantageusement, le volet rabattable est muni de plots amortisseurs sur l'une de ses faces, et notamment sur sa face destinée à venir en contact avec la base de l'ordinateur lorsque le dit volet vient obturer la fenêtre ou ouverture traversante définie par le cadre de la partie inférieure, et ce, afin d'optimiser la protection de l'ordinateur portable, notamment pendant les phases de transport.

Avantageusement, le volet rabattable est muni d'un ruban élastique, apte à favoriser la préhension de l'ensemble constitué par la housse et l'ordinateur portable, lorsque ce dernier fonctionne en mode tablette tactile.

### DESCRIPTION DES FIGURES

La manière dont l'invention peut être réalisée et les avantages qui en découlent ressortiront mieux des exemples de réalisation qui suivent, donnés à titre indicatif et non limitatif, à l'appui des figures annexées.
La figure 1 est une représentation schématique en perspective d'un ordinateur portable ouvert au sein d'une housse de protection conforme à l'invention.
La figure 2 est une représentation schématique en perspective de la housse de protection de l'invention munie de l'ordinateur portable selon une autre configuration d'utilisation.
La figure 3 est une vue analogue à la figure 2 selon un autre angle de vue.
La figure 4 est une représentation schématique en plan de la housse de protection à plat, c'est-à-dire ouverte, en l'absence de l'ordinateur portable.
La figure 5 est une représentation schématique en perspective illustrant la housse de protection conforme à l'invention avec le réceptacle de la base de l'ordinateur portable présentant un léger débattement.
La figure 6 est une vue analogue à la figure 5, illustrant le volet rabattable ou fond de la partie inférieure de la housse partiellement ouvert.
La figure 7 est une vue schématique en plan de la house de protection de l'invention avec le réceptacle de la base complètement déplié.
La figure 8 est une représentation schématique de la housse de protection de l'invention munie de l'ordinateur portable en mode tablette tactile, avec l'un des éléments de ladite housse en mode déplié.

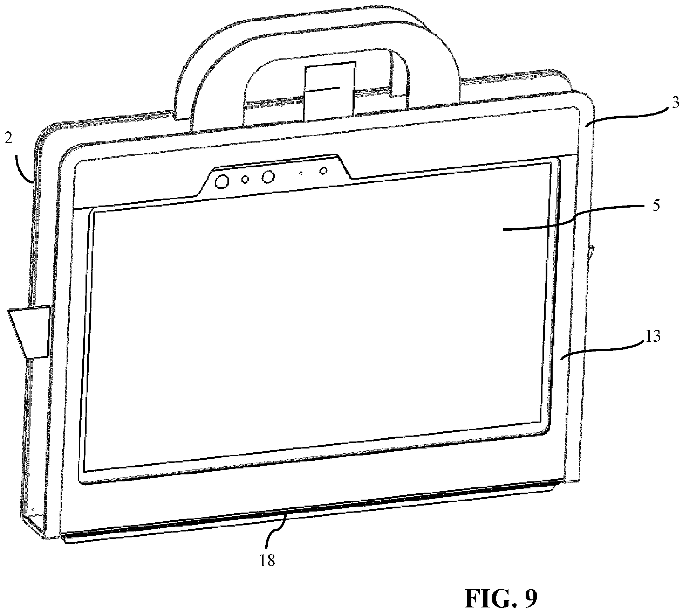

La figure 9 est une vue similaire à la figure 8 en mode opérationnel, vue du côté de la housse permettant l'accès à l'écran de l'ordinateur portable.
La figure 10 est une vue analogue à la figure 9, vue de l'autre côté de ladite housse, dans la même configuration.

### DESCRIPTION DETAILLEE DES FIGURES

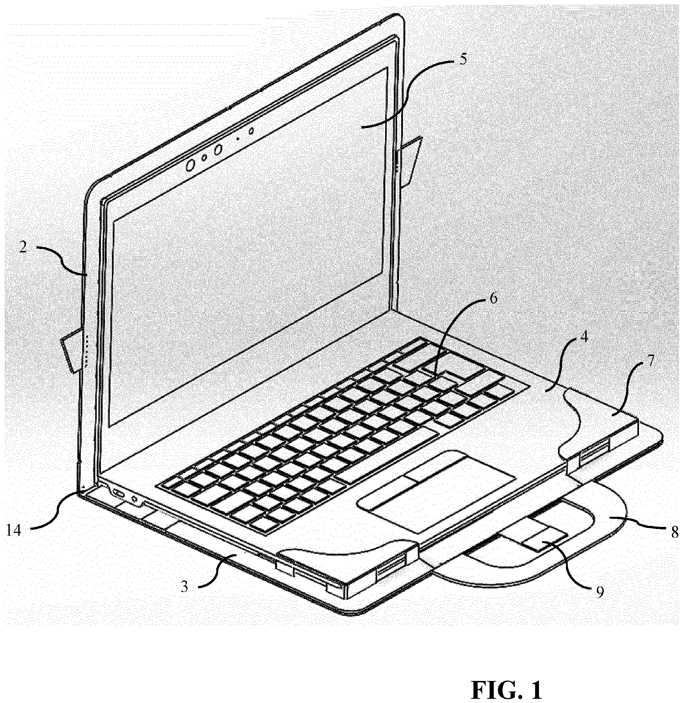

On a donc représenté, au sein de la figure 1, la housse de protection conforme à l'invention munie d'un ordinateur portable en position ouverte, c'est-à-dire en position classique d'utilisation.

Typiquement, cette housse est constituée d'une partie inférieure (3) et d'une partie supérieure (2) reliée entre elles par une zone de jonction (14). Selon un exemple de réalisation, l'ensemble de la housse, c'est-à-dire la partie inférieure (3), la partie supérieure (2) et la zone de jonction est constitué d'une structure continue externe, typiquement réalisée en polyamide 6 (Nylon^{®}) ou en polyuréthane, lesdites parties inférieure (2) et supérieure (3) recevant en outre une plaque de rigidification, typiquement réalisée en polycarbonate accolée contre la face interne de la structure continue externe. En revanche, la zone de j onction (14) est exempte d'une telle plaque, de telle sorte à permettre l'ouverture et la fermeture de la housse ainsi constituée, et faisant en quelque sorte fonction d'articulation de l'une des parties par rapport à l'autre.

En outre, la face interne de la housse reçoit une doublure contrecollée sur les plaques de rigidification.

Enfin, le bord de la housse est surpiqué, de telle sorte à optimiser la solidarisation de ces différents éléments, et garantir une certaine pérennité à la housse.

Lorsque l'ordinateur est fermé, c'est-à-dire lorsque l'écran (5) de l'ordinateur est rabattu sur sa base (4), munie de son clavier (6), la partie supérieure (2) est également rabattue et l'ensemble peut être fermé, par exemple au moyen d'une languette (9), pourvue d'un système de fixation réversible boucle et crochet mieux connu sous la marque Velcro^{®} venant se positionner sur la face externe de la partie supérieure (2) de la housse.

Comme déjà évoqué supra, les parties respectivement supérieure (2) et inférieure (3), sont rigides. Bien évidemment, afin d'assurer leur fonction de protection, elles présentent des dimensions légèrement supérieures à celles des dimensions classiques d'un ordinateur portable.

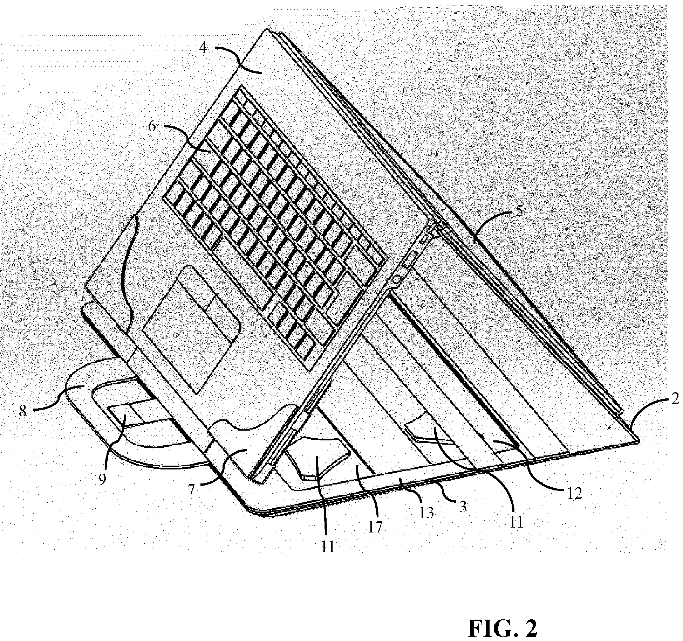

On a représenté, au sein de la figure 2, un autre mode d'utilisation d'un ordinateur portable au sein de la housse conforme à l'invention. En l'espèce, l'écran de l'ordinateur est susceptible d'être basculé d'un angle supérieur à 180° par rapport au plan défini par la base (4) dudit ordinateur. Dans cette configuration, l'écran est rabattu par-dessus la partie supérieure (2), cette dernière venant se bloquer au niveau de la charnière d'articulation de l'écran (5) sur la base (4) de l'ordinateur. On dispose ainsi d'un mode d'utilisation de l'ordinateur en mode pupitre.

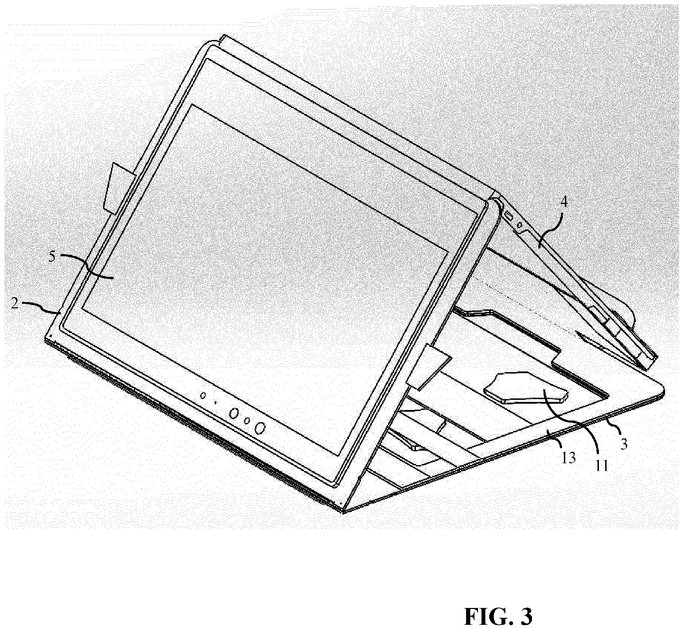

La figure 3 est une vue analogue à la figure 2, vue selon une autre direction, dans laquelle on observe principalement l'écran (5) dudit ordinateur susceptible de fonctionner dans cette hypothèse en mode tablette tactile en mode pupitre.

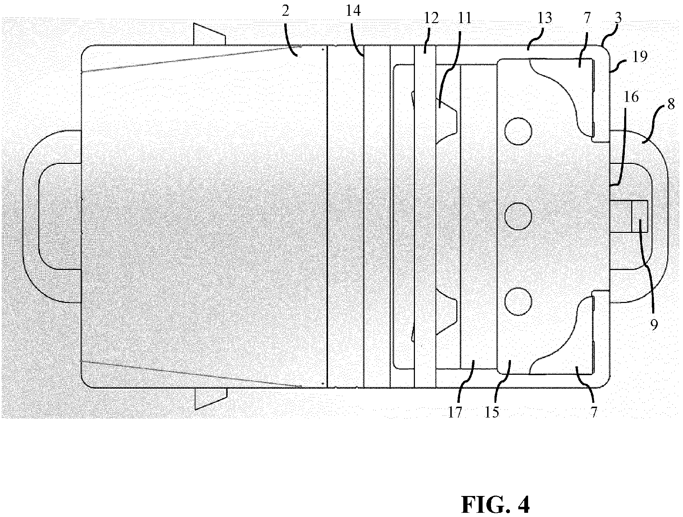

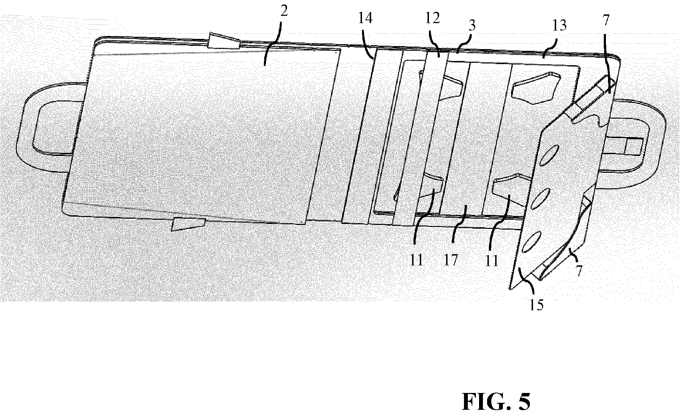

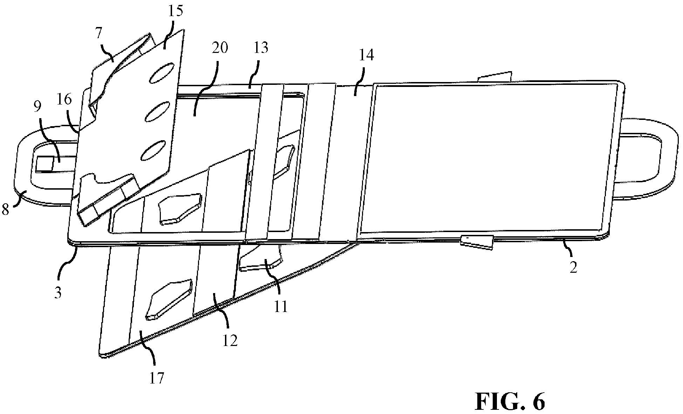

On a représenté, en relation avec la figure 4, la housse proprement dite, en plan. Cette vue permet notamment de mieux distinguer les caractéristiques de l'invention. On peut notamment observer un réceptacle (15), articulé par exemple par couture (16) sur le bord libre (19) de la partie inférieure (3), ledit bord libre en question étant opposé au bord de ladite partie inférieure (3) adjacent à la zone de jonction (14) entre la partie inférieure (3) et la partie supérieure (2). Ce réceptacle est constitué d'une languette, s'étendant selon une distance légèrement inférieure à la longueur du bord (19), et est pourvu de zones de réception proprement dites (7) de la base (4) dudit ordinateur portable. Ce réceptacle (15) que l'on peut mieux observer sur les figures 5 et 6, est configuré de telle sorte que la base (4) dudit ordinateur portable puisse être effectivement réceptionnée dans les zones (7), typiquement par simple insertion de ladite base, ces zones (7) présentant donc des dimensions adaptées aux dimensions standards desdits ordinateurs portables, plus particulièrement en termes de hauteur des logements qu'elles définissent, compatibles avec l'épaisseur quasi standard de la base (4).

Ainsi, la base (4) de l'ordinateur n'est pas reçue directement sur la face interne de la partie inférieure de la housse (3), comme c'est le cas pour les housses de l'état antérieur de la technique, mais dans ce réceptacle (7, 15), comme déjà dit, articulé (16) sur le bord libre (19) de ladite partie inférieure (3). Ce faisant, l'ordinateur peut lui-même basculer hors de la housse de protection, tout en étant toujours réceptionné en son sein.

Selon une autre caractéristique de l'invention, la partie inférieure (3) de la housse est dans les faits constituée d'un cadre rectangulaire (13), s'étendant sur toute la périphérie de ladite partie inférieure (3). Ce cadre définit une ouverture ou fenêtre traversante (20), dont les dimensions correspondent sensiblement aux dimensions de l'écran (5) de l'ordinateur portable, et dont la fonction sera décrite ci-après.

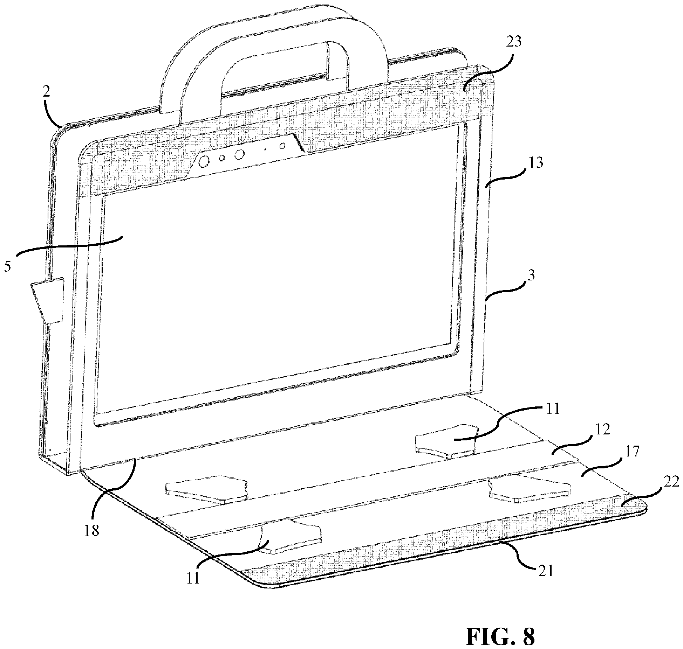

En mode classique d'utilisation de la housse munie de l'ordinateur portable, c'est-à-dire typiquement en mode de transport ou en mode de fonctionnement tel qu'illustré sur la figure 1, cette fenêtre traversante (20) est obturée par un fond ou volet (17), que l'on peut mieux observer sur les figures 6 et 8.

Selon une première variante de l'invention, ce fond ou volet (17) est articulé au niveau de la zone de jonction (14) par simple couture (18). Il est susceptible d'être rabattu contre la face externe du cadre (13) en mode « normal » d'utilisation de la housse de l'ordinateur portable. A cet effet, le fond ou volet (17) est muni, notamment au voisinage de son bord libre (21), de moyens de fixation réversible (22) de type boucles et crochets (Velcro^{®}), aptes à coopérer avec un système complémentaire (23) correctement positionné sur la face externe du cadre (13) (voir figure 8).

Alternativement, selon un mode de réalisation non représenté, ce fond (17) peut être complètement désolidarisable de la housse. Dans ce cas, il est muni, au moins au niveau de ses quatre angles, de systèmes de solidarisation réversible, par exemple de type boucles et crochets aptes à coopérer avec des systèmes complémentaires positionnés de manière appropriée sur la face externe du cadre (13).

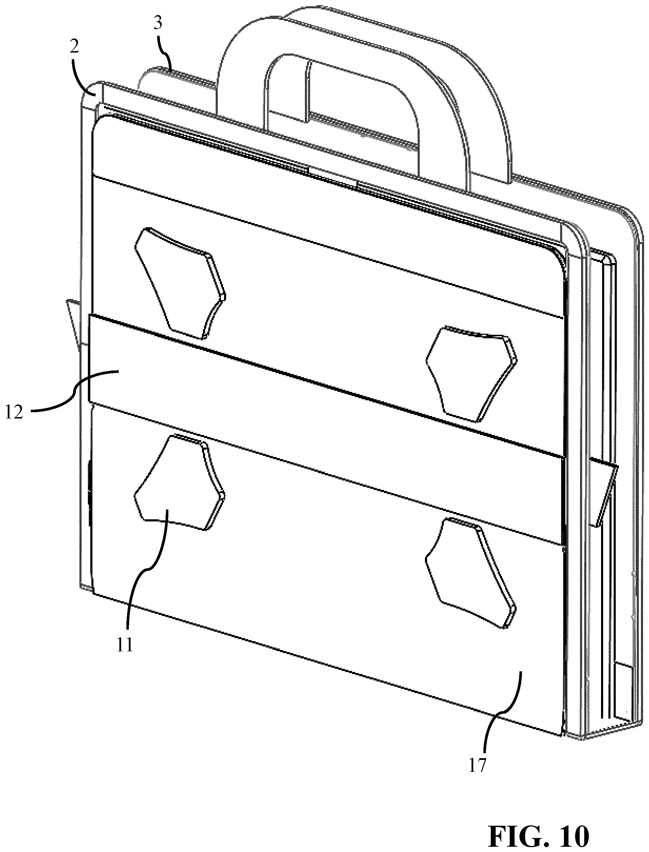

Corollairement, ce fond (17) peut être muni de plots d'amortissement (11), destinés, notamment pendant les phases de transport, à optimiser la protection conférée par la housse. Ce fond (17) peut également recevoir un ruban élastique (12), s'étendant sur toute la largeur dudit fond, et destiné à favoriser la préhension par l'utilisateur de la housse munie de l'ordinateur portable lorsque ledit fond est rabattu contre la face externe de la partie supérieure (2) lors de l'utilisation de l'ordinateur en mode tablette, et par exemple illustré sur la figure 10 : l'utilisateur insère sa main sous ce ruban élastique (12), évitant ainsi les risques de chute, notamment lorsque l'utilisateur est en station debout.

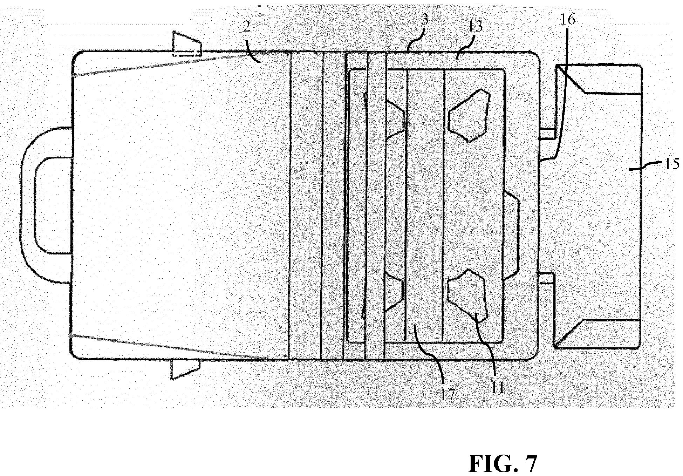

On a représenté, en relation avec la figure 7, une vue en plan de la housse avec le réceptacle (15) complètement déplié.

La figure 8 illustre une vue schématique en perspective de l'ordinateur portable au sein de la housse, en vue d'une utilisation en mode tablette. Apparaît ainsi sur cette figure 8, non plus le clavier mais l'écran (5) dudit ordinateur, directement accessible, alors même que la housse est en mode opérationnel et protège ledit ordinateur, en l'espèce contre les chocs inhérents aux chutes.

Afin d'arriver à cette configuration, la base (4) de l'ordinateur, comme déjà dit, est reçue dans le réceptacle (7, 15). Ce faisant, il n'y a pas désolidarisation de l'ordinateur portable hors de la housse de l'invention. Grâce à l'articulation du réceptacle (15) par rapport à la partie inférieure (3) de la housse, il devient possible pour l'utilisateur de basculer légèrement la base (4) en direction de la poignée (8) puis, de rabattre complètement l'écran (5) dudit ordinateur contre la face extérieure de la base (4), bien évidemment lorsque l'ordinateur portable en question est du type convertible PC - tablette, c'est-à-dire dans lequel l'écran (5) est susceptible d'être ouvert à 360° par rapport à sa base (4).

Une fois cette opération réalisée, la zone visible et tactile de l'écran, après rabat du réceptacle (15) contre le cadre (13) de la partie inférieure (3), se trouve au regard de la fenêtre traversante (20) définie par ledit cadre (13). La partie supérieure (2) peut alors être rabattue sur la base (4) de l'ordinateur. Afin de permettre à l'utilisateur d'accéder à l'écran (5), le fond ou volet (17) est escamoté hors du cadre (13), libérant ainsi l'accessibilité à l'écran (5).

En phase d'utilisation dans cette configuration, ledit fond (17) est avantageusement rabattu contre la face externe de la partie supérieure (2) de la housse, tel qu'on peut l'observer sur la figure 10. Le fond ou volet (17) peut avantageusement être maintenu contre la face externe de la partie supérieure (2) à l'aide de la languette (9).

Ce faisant, ledit écran tactile (5) de l'ordinateur peut être utilisé par l'utilisateur alors même que l'intégralité de l'ordinateur est protégée par la housse.

On conçoit tout l'intérêt de la présente invention qui permet de disposer d'une protection d'un ordinateur portable, non seulement en mode transport, mais également en mode d'utilisation, en ce compris en mode tablette, ce que les dispositifs de protection connus à ce jour ne permettaient pas d'offrir.

## Revendications

1. Housse de protection pour ordinateur portable, ladite housse comprenant une première partie (2) et une seconde partie (3), articulées l'une à l'autre au niveau d'une zone de jonction (14), et destinée à protéger la face supérieure (5) et la face inférieure (4) dudit ordinateur portable, dans laquelle
• l'une (3) des parties est munie d'un réceptacle (7, 15) apte à recevoir la base (4) dudit ordinateur, ledit réceptacle (7, 15) étant articulé au niveau du bord libre (19) de ladite partie (3), opposé au bord de la partie (3) participant à la zone de jonction (14) entre les deux parties ; **caractérisée**
• **en ce que** ladite partie (3) est constituée d'un cadre (13) définissant une ouverture ou fenêtre traversante (20), et d'un volet rabattable (17), apte à obturer réversiblement ladite ouverture ou fenêtre (20).

2. Housse de protection pour ordinateur portable selon la revendication 1, ***caractérisée* en ce que** le volet rabattable (17) est articulé (18) au niveau de la zone de jonction (14) entre la première partie (2) et la seconde partie (3).

3. Housse de protection pour ordinateur portable selon la revendication 1, ***caractérisée* en ce que** le volet rabattable (17) est totalement désolidarisable de la housse.

4. Housse de protection pour ordinateur portable selon l'une des revendications 1 à 3, ***caractérisée* en ce que** partie au moins du volet rabattable (17) est fixable réversiblement sur le cadre (13) de la partie (3) de la housse par tout moyen, et notamment par un système de type boucles et crochets (22, 23).

5. Housse de protection pour ordinateur portable selon l'une des revendications 1 à 4, ***caractérisée* en ce que** le réceptacle (7, 15) est muni de logements (7) aptes à recevoir de manière amovible la base (4) dudit ordinateur.

6. Housse de protection pour ordinateur portable selon l'une des revendications 1 à 5, ***caractérisée* en ce que** le réceptacle (7, 15) s'étend sur une partie seulement de l'une des dimensions de la partie (3) considérée.

7. Housse de protection pour ordinateur portable selon l'une des revendications 1 à 6, ***caractérisée* en ce que** l'articulation entre le réceptacle (7, 15) et la partie (3) résulte d'une simple couture (16).

8. Housse de protection pour ordinateur portable selon l'une des revendications 1 à 7, ***caractérisée* en ce que** le volet rabattable (17) est muni de plots amortisseurs (11) sur sa face destinée à venir au contact de la base (4) de l'ordinateur portable, lorsque ledit volet vient obturer la fenêtre traversante (20) définie par le cadre (13) de la partie (3).

9. Housse de protection pour ordinateur portable selon l'une des revendications 1 à 8, ***caractérisée* en ce que** le volet rabattable (17) est muni d'un ruban élastique (12), apte à favoriser la préhension de l'ensemble constitué par la housse et l'ordinateur portable, lorsque ce dernier fonctionne en mode tablette.

## Patentansprüche

1. Schutzhülle für einen Laptop, wobei die Hülle einen ersten Teil (2) und einen zweiten Teil (3) umfasst, die in einem Verbindungsbereich (14) gelenkig miteinander verbunden sind und dazu bestimmt ist, die Oberseite (5) und die Unterseite (4) des Laptops zu schützen, wobei
• einer (3) der Teile mit einer Aufnahme (7, 15) versehen ist, die geeignet ist, die Basis (4) des Laptops aufzunehmen, wobei die Aufnahme (7, 15) an dem freien Rand (19) des Teils (3) gelenkig angebracht ist, der dem Rand des Teils (3) gegenüberliegt, der an dem Verbindungsbereich (14) zwischen den beiden Teilen mitwirkt; ***dadurch gekennzeichnet,***
• **dass** der Teil (3) aus einem Rahmen (13), der eine durchgehende Öffnung oder ein durchgehendes Fenster (20) bildet, und aus einem klappbaren Deckel (17) besteht, der geeignet ist, die Öffnung oder das Fenster (20) reversibel zu verschließen.

2. Schutzhülle für einen Laptop nach Anspruch 1, ***dadurch gekennzeichnet,* dass** der klappbare Deckel (17) im Verbindungsbereich (14) zwischen dem ersten Teil (2) und dem zweiten Teil (3) gelenkig (18) angebracht ist.

3. Schutzhülle für einen Laptop nach Anspruch 1, ***dadurch gekennzeichnet,* dass** der klappbare Deckel (17) vollständig von der Hülle abtrennbar ist.

4. Schutzhülle für einen Laptop nach einem der Ansprüche 1 bis 3,
***dadurch gekennzeichnet,* dass** zumindest ein Teil des klappbaren Deckels (17) auf dem Rahmen (13) des Teils (3) der Hülle durch jedes Mittel und insbesondere durch ein System vom Typ Schlaufen und Haken (22, 23) lösbar befestigt werden kann.

5. Schutzhülle für einen Laptop nach einem der Ansprüche 1 bis 4, ***dadurch gekennzeichnet,* dass** die Aufnahme (7, 15) mit Aussparungen (7) versehen ist, die geeignet sind, die Basis (4) des Laptops auf abnehmbare Weise aufzunehmen.

6. Schutzhülle für einen Laptop nach einem der Ansprüche 1 bis 5, ***dadurch gekennzeichnet,* dass** sich die Aufnahme (7, 15) nur über einen Teil einer der Abmessungen des betreffenden Teils (3) erstreckt.

7. Schutzhülle für einen Laptop nach einem der Ansprüche 1 bis 6, ***dadurch gekennzeichnet,* dass** das Gelenk zwischen der Aufnahme (7, 15) und dem Teil (3) aus einer einfachen Naht (16) hervorgeht.

8. Schutzhülle für einen tragbaren Computer nach einem der Ansprüche 1 bis 7, ***dadurch gekennzeichnet,* dass** der klappbare Deckel (17) mit Dämpfungsnoppen (11) auf seiner Seite versehen ist, die dazu bestimmt ist, mit der Basis (4) des Laptops in Kontakt zu kommen, wenn der Deckel das durch den Rahmen (13) des Teils (3) definierte durchgehende Fenster (20) verschließt.

9. Schutzhülle für einen Laptop nach einem der Ansprüche 1 bis 8, ***dadurch gekennzeichnet,* dass** der klappbare Deckel (17) mit einem Elastikband (12) versehen ist, das die Griffigkeit der aus der Hülle und dem Laptop bestehenden Einheit fördert, wenn letzterer im Tablet-Modus benutzt wird.

## Claims

1. A protective case for a laptop computer, said case comprising a first portion (2) and a second portion (3), hinged to each other at the level of a junction area (14), and intended to protect the upper surface (5) and the lower surface (4) of said laptop computer, in which one (3) of the portions is provided with a receptacle (7, 15) capable of receiving the base (4) of said computer, said receptacle (7, 15) being hinged at the level of the free edge (19) of said portion (3), opposite to the edge of the portion (3) taking part in the junction area (14) between the two portions, ***characterized* in that** said portion (3) is formed of a frame (13) defining a through opening or window (20), and of a foldable flap (17), capable of reversibly closing said opening or window (20).

2. Protective case for a laptop computer according to claim 1, ***characterized* in that** the foldable flap (17) is hinged (18) at the level of the junction area (14) between the first portion (2) and the second portion (3).

3. Protective case for a laptop computer according to claim 1, ***characterized* in that** the foldable flap (17) is totally detachable from the case.

4. Protective case for a laptop computer according to any of claims 1 to 3, ***characterized* in that** at least part of the foldable flap (17) can be reversibly attached to the frame (13) of the portion (3) of the case by any means, and particularly by a hook-and-loop type system (22, 23).

5. Protective case for a laptop computer according to any of claims 1 to 4, ***characterized* in that** the receptacle (7, 15) is provided with housings (7) capable of removably receiving the base (4) of said computer.

6. Protective case for a laptop computer according to any of claims 1 to 5, ***characterized* in that** the receptacle (7, 15) extends over a portion only of one of the dimensions of the considered portion (3).

7. Protective case for a laptop computer according to any of claims 1 to 6, ***characterized* in that** the hinge between the receptacle (7, 15) and the portion (3) results from a simple stitching (16).

8. Protective case for a laptop computer according to any of claims 1 to 7, ***characterized* in that** the foldable flap (17) is provided with dampers (11) on its surface intended to come into contact with the base (4) of the laptop computer, when said flap closes the through window (20) defined by the frame (13) of the portion (3).

9. Protective case for a laptop computer according to any of claims 1 to 8, ***characterized* in that** the foldable flap (17) is provided with an elastic band (12), capable of favoring the gripping of the assembly formed by the case and the laptop computer, when the latter operates in tablet mode.
